# EUROPÄISCHE PATENTSCHRIFT

(11) **EP 3 517 843 B1**
(45) Veröffentlichungstag und Bekanntmachung des Hinweises auf die Patenterteilung: **04.03.2026**
(21) Anmeldenummer: 19153282.9
(22) Anmeldetag: 23.01.2019
(51) Int. Cl.: F24C 7/08, A21B 3/04

(54) **VERFAHREN ZUM BETREIBEN EINES GARGERÄTS SOWIE GARGERÄT**
COOKING DEVICE AND METHOD FOR OPERATING A COOKING DEVICE
PROCÉDÉ DE FONCTIONNEMENT D'UN APPAREIL DE CUISSON AINSI QU'APPAREIL DE CUISSON

(30) Priorität: 23.01.2018 DE 102018101467
(43) Veröffentlichungstag der Anmeldung: 31.07.2019
(73) Patentinhaber: Rational Aktiengesellschaft, 86899 Landsberg am Lech (DE)
(72) Erfinder: Nebel, Felix, 86899 Landsberg am Lech (DE); Schmidberger, Wolfgang, 86899 Landsberg am Lech (DE); Paintner, Aldo, 86899 Landsberg am Lech (DE); Heiß, Stefan, 86899 Landsberg am Lech (DE)
(74) Vertreter: Prinz & Partner mbB

(56) Entgegenhaltungen:
- EP-A1- 2 860 458
- EP-A2- 2 042 809
- DE-A1- 102017 107 164

## Beschreibung

Die Erfindung betrifft ein Verfahren zum Betreiben eines Gargeräts sowie ein Gargerät.

Beim Dämpfen von Gargut in einem Gargerät wird üblicherweise Dampf erzeugt und in den Garraum eingebracht, während eine Lüftervorrichtung mittels eines Lüfterrads einen Luftvolumenstrom in den Garraum erzeugt. Dabei wird jedoch auch über Abluftkanäle ein Dampf-Luft-Gemisch aus dem Garraum ausgeblasen, wodurch eine angestrebte Dampfsättigung langsamer erreicht wird. Wird der Dampf hingegen bei ausgeschalteter Lüftervorrichtung in den Garraum eingebracht, so besteht die Gefahr, dass sich Inhomogenitäten in der Garraumatmosphäre ausbilden und Gargut in unterschiedlichen Bereichen des Garraums unterschiedlich schnell gegart wird.

Die EP 3 517 843 A1 offenbart ein Verfahren zum Betreiben eines Gargeräts. Zu Beginn eines Garprozesses wird ein vorbestimmter Wasservolumenstrom in den Garraum eingebracht. Mittels eines Temperatursensors wird die Garraumtemperatur erfasst und basierend auf der Garraumtemperatur eine Zeit ermittelt, nach deren Ablauf der Wasservolumenstrom reduziert wird.

Die EP 2 042 809 A1 offenbart ein Gargerät mit einem Lüfterrad, einer Heizvorrichtung, einem Dampfgenerator und einer Beschwadungseinrichtung. Eine Beschickungsmenge kann aus einem Temperaturverlauf der Garraumatmosphäre ermittelt werden. Basierend auf der bestimmten Beschickungsmenge kann eine Lüfterradgeschwindigkeit angepasst werden.

Aufgabe der Erfindung ist es daher, ein Verfahren zum Betreiben eines Gargeräts sowie ein Gargerät bereitzustellen, bei dem die Nachteile aus dem Stand der Technik verbessert sind.

Die Aufgabe wird erfindungsgemäß gelöst durch ein Verfahren zum Betreiben eines Gargeräts gemäß Anspruch 1. Bei dem Luftvolumenstrom handelt es sich dabei um einen Strom im Garraum, einen Strom in den Garraum und/oder einen Strom aus dem Garraum. Das erfindungsgemäße Verfahren basiert auf dem Grundgedanken, den Luftvolumenstrom abhängig von der Beschickungslast einzustellen. Insbesondere wird ein minimaler Luftvolumenstrom eingestellt, der aufgrund der Beschickungslast notwendig ist. Dadurch wird die Garraumatmosphäre (bei minimaler Frischluftzufuhr) möglichst homogen gehalten, sodass Gargut im Garraum gleichmäßig gegart wird. Es kann auch ein Luftvolumenstrom von null eingestellt werden. Durch die beschickungslastabhängige Luftvolumenstromregelung wird weniger Dampf-Luft-Gemisch aus dem Garraum ausgeblasen. Daher wird eine angestrebte Dampfsättigung schneller erreicht, und die Garzeit des Garguts ist reduziert. Anders ausgedrückt wird mittels des erfindungsgemäßen ein möglichst optimaler Kompromiss zwischen einer homogenen Garraumatmosphäre (wichtig für gleichmäßiges Garen des Garguts im Garraum) und einem möglichst schnellen Erreichen der angestrebten Dampfsättigung erreicht. Wird der Dampf außerhalb des Garraums erzeugt, so erfolgt zusätzlich noch ein Schritt des Einbringens des Dampfes in den Garraum. Der Luftvolumenstrom wird dann wenigstens während des Einbringens des Dampfes in den Garraum geregelt.

Es hat sich gezeigt, dass es bei einer geringen Beschickungslast nicht notwendig ist, die Garraumatmosphäre mittels der Luftumwälzungsvorrichtung durchzumischen. In diesem Fall wird also kein Dampf-Luft-Gemisch aus den Garraum ausgeblasen, wodurch eine angestrebte Dampfsättigung besonders schnell erreicht wird.

Basierend auf den weiteren Betriebsparametern, insbesondere basierend auf wenigstens einem weiteren Betriebsparameter, wird der Luftvolumenstrom eingestellt. Bei den Betriebsparametern handelt es sich beispielsweise um einen oder mehrere der folgenden Größen der Garraumatmosphäre: Temperatur, relative Luftfeuchtigkeit, absolute Luftfeuchtigkeit, auf ein Lüfterrad der Luftumwälzungsvorrichtung wirkender Widerstand und/oder Druck.

Die Beschickungslast wird in die Kategorien gering, mittel und groß klassifiziert. Die Klassifizierung erfolgt anhand der maximalen Beschickungsmenge, gemessen in Gastronomie-Behältern (GN-Behälter). Die Klassifizierung ist wie folgt: eine Beladung mit weniger als einem Viertel der maximal möglichen GN-Behälter entspricht einer kleinen Beschickungslast, eine Beladung zwischen einem Viertel und der Hälfte der maximal möglichen GN-Behälter entspricht einer mittleren Beschickungslast, und eine Beladung mit mehr als der Hälfte der maximal möglichen GN-Behälter entspricht einer großen Beschickungslast.

Betriebsparameter in verschiedenen Bereichen des Gargeräts werden miteinander verglichen, um den Luftvolumenstrom zu regeln. Ein großer Unterschied in den Betriebsparametern in den verschiedenen Bereichen deutet auf eine große Inhomogenität der Garraumatmosphäre hin. Um zu verhindern, dass das Gargut in den unterschiedlichen Bereichen unterschiedliche Garzeiten aufweist, wird dann der Luftvolumenstrom erhöht, sodass die Garraumatmosphäre besser durchmischt wird. Der Luftvolumenstrom wird dabei vollautomatisch von einer Steuereinheit des Gargeräts gesteuert angepasst.

Der Luftvolumenstrom wird schrittweise erhöht, wenn die Betriebsparameter in den verschiedenen Bereichen des Gargeräts um mehr als einen vordefinierten Wert voneinander abweichen. Insbesondere wird der Luftvolumenstrom so lange erhöht, bis der Unterschied zwischen den Betriebsparametern in den verschiedenen Bereichen ausreichend klein ist. Dadurch wird eine ausreichende Durchmischung der Garraumatmosphäre und damit ein gleichmäßiges Garen des Garguts gewährleistet. Gleichzeitig wird eine Frischluftzufuhr auf ein notwendiges Minimum beschränkt, sodass die angestrebte Dampfsättigung im Garraum schnellstmöglich erreicht und die Garzeit reduziert wird.

Gemäß einer Ausgestaltung der Erfindung wird die Beschickungslast aus einem Verlauf der Garraumtemperatur ermittelt, insbesondere aus einem Verlauf der Garraumtemperatur gegen die Zeit. Hierzu wird die Garraumtemperatur an wenigstens einer Stelle im Gargerät gemessen, vorzugsweise im Garraum. Beispielsweise kann zur Bestimmung der Beschickungslast ein lokales Minimum im Verlauf der Garraumtemperatur nach der Beschickung ermittelt und ausgewertet werden. Je höher die Beschickungslast ist, desto kleiner ist dabei die Ordinate des lokalen Minimums. Alternativ kann auch die Ableitung des Verlaufs der Garraumtemperatur ermittelt und ausgewertet werden, insbesondere in einem Bereich, der zeitlich nach dem Durchschreiten des lokalen Minimums erfolgt. Je höher die Beschickungslast ist, desto steiler ist der Abfall des Temperaturverlaufs direkt nach der Beschickung und desto flacher ist der Anstieg der Garraumtemperatur nach Überschreiten des lokalen Minimums.

In einer Ausgestaltung der Erfindung werden Temperaturen in verschiedenen Bereichen des Gargeräts miteinander verglichen. Bei den unterschiedlichen Bereichen handelt es sich beispielsweise um einen oder mehreren der folgenden: Deckennähe des Garraums, Bodennähe des Garraums, Abluftkanal und/oder Kondensationskammer. Dies kann mittels bereits vorhandener Messeinrichtungen (Temperaturfühler im Garraum und in der Kondensationskammer, Kerntemperaturfühler) oder mittels eigens dafür vorgesehener Messeinrichtungen erfolgen.

Gemäß einer weiteren Ausgestaltung werden an verschiedenen Lüfterrädern der Luftumwälzungsvorrichtung wirkende Widerstände miteinander verglichen. Vorzugsweise werden die mehreren Lüfterräder dazu kurz angefahren, insbesondere mit gleicher Drehzahl. Der durch die Garraumatmosphäre auf die Lüfterräder wirkende Widerstand wird dann zum Beispiel aus einer Strom- und/oder Leistungsaufnahme der einzelnen Lüfterräder bestimmt.

Ein weiterer Aspekt sieht vor, dass eine Luftfeuchtigkeit der Garraumatmosphäre in verschiedenen Bereichen des Gargeräts miteinander verglichen wird. Dabei handelt es sich zum Beispiel um die Luftfeuchtigkeit in Bodennähe und/oder in Deckennähe. Dies kann mittels bereits vorhandener Messeinrichtungen oder mittels eigens dafür vorgesehener Messeinrichtungen erfolgen.

Die Aufgabe wird ferner erfindungsgemäß gelöst durch ein Gargerät mit einer Dampferzeugungseinrichtung, einer Heizeinrichtung sowie einer Luftumwälzungsvorrichtung, wobei das Gargerät dazu eingerichtet ist, ein erfindungsgemäßes Verfahren durchzuführen. Bezüglich der Vorteile wird auf die obigen Erläuterungen verwiesen.

Weitere Vorteile und Eigenschaften ergeben sich aus der nachfolgenden Beschreibung und den Zeichnungen, auf die Bezug genommen wird. In diesen zeigen:
- Fig. 1 in einer schematischen Frontansicht ein erfindungsgemäßes Gargerät;
- Fig. 2 ein schematisches Ablaufdiagramm der Schritte eines erfindungsgemäßen Verfahrens; und
- Fig. 3 ein schematisches Diagramm eines Verlaufs einer Garraumtemperatur aufgetragen gegen die Zeit.

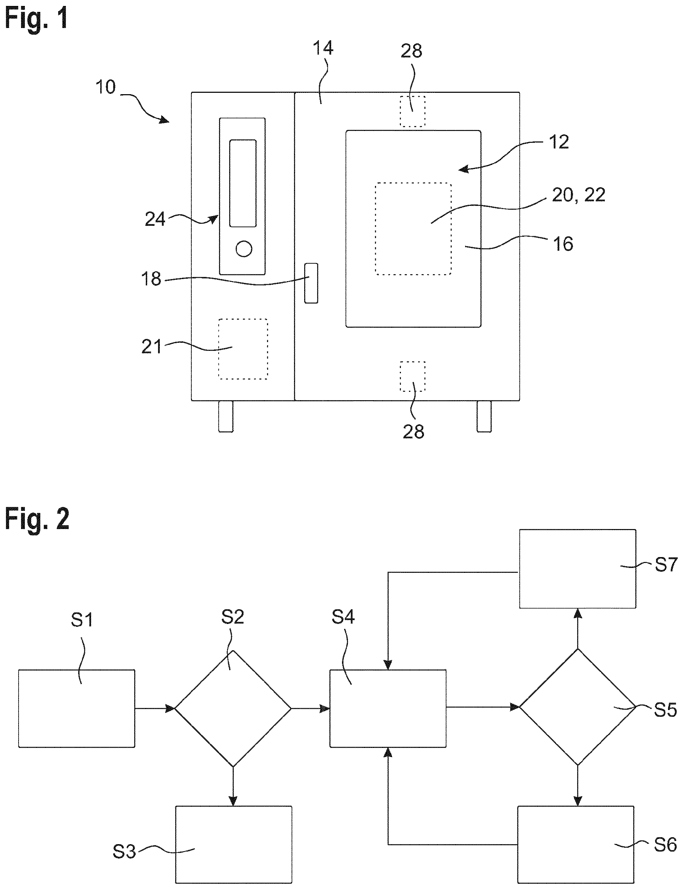

Figur 1 zeigt ein Gargerät, das zur Zubereitung von Speisen ausgebildet ist. Bei dem Gargerät 10 handelt es sich insbesondere um ein Profi-Gargerät, wie es in Kantinen, Restaurants und der Großgastronomie verwendet wird, vorzugsweise um einen sogenannten Kombidämpfer, in dem Nahrungsmittel in Heißluft, Heißdampf oder eine Garraumatmosphäre mit einstellbarem Feuchtigkeitsgrad gegart werden können. Zudem kann das Gargerät 10 dazu ausgebildet sein, Speisen mittels Mikrowellen zu garen.

Das Gargerät 10 hat einen Garraum 12 zur Aufnahme von Gargut, der über eine Garraumtür 14 für einen Anwender zugänglich ist. Die Garraumtür 14 kann ein Fenster 16 aufweisen, das dem Anwender erlaubt, in den Garraum 12 hineinzublicken, beispielsweise um einen Garzustand des Garguts zu kontrollieren.

An der Garraumtür 14 sind Öffnungsmittel 18 angebracht, mittels derer der Anwender die Garraumtür 14 öffnen kann, beispielswiese um den Garraum 12 mit Gargut zu beschicken.

Zudem weist das Gargerät 10 eine Heizeinrichtung 20 zum Heizen einer Garraumatmosphäre, eine Dampferzeugungseinrichtung 21 zum Erzeugen von Wasserdampf sowie eine Luftumwälzungsvorrichtung 22 zum Erzeugen eines Luftvolumenstroms in den Garraum 12 auf (in Figur 1 durch die gestrichelten Linien angedeutet). Die Luftumwälzungsvorrichtung 22 kann dazu ausgebildet sein, auch einen Luftvolumenstrom im oder aus dem Garraum 12 zu erzeugen.

Das Gargerät 10 hat außerdem Eingabe- und Anzeigemittel 24, über die der Anwender gewisse Betriebsparameter des Gargeräts 10 einstellen kann und auf denen Informationen über Betriebsparameter des Gargeräts 10 dargestellt werden. Die gewissen Betriebsparameter umfassen beispielsweise eine oder mehrere der folgenden Größen: Temperatur der Garraumatmosphäre, Garzeit, (gewünschte) Kerntemperatur des Garguts, Gewicht des Garguts, Art des **Garguts und/oder** Luftfeuchtigkeit der Garraumatmosphäre. Insbesondere sind über die Eingabe- und Anzeigemittel 24 vordefinierte Garprogramme einstellbar.

Das Gargerät 10 ist dazu ausgebildet, ein im Folgenden anhand von Figur 2 beschriebenes Verfahren durchzuführen.

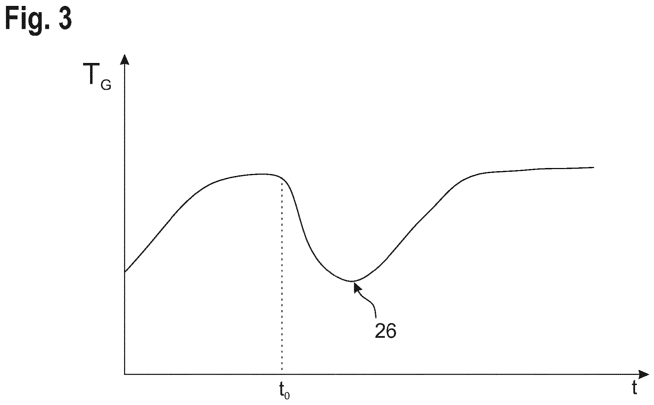

Nach einer optionalen Vorheizphase wird eine Beschickungslast im Garraum 12 ermittelt (Schritt S1). Die Beschickungslast wird beispielsweise aus einem Verlauf der Garraumtemperatur *T_{G}* ermittelt, insbesondere aus einem Verlauf der Garraumtemperatur *T_{G}* gegen die Zeit (siehe Figur 3). Hierzu wird die Garraumtemperatur *T_{G}* an wenigstens einer Stelle im Gargerät 10 gemessen, vorzugsweise im Garraum 12.

Gemäß einer Variante wird zur Bestimmung der Beschickungslast ein lokales Minimum 26 im Verlauf der Garraumtemperatur *T_{G}* nach der Beschickung ermittelt und ausgewertet, die zum Zeitpunkt *t*₀ erfolgt. Je höher die Beschickungslast ist, desto kleiner ist dabei die Ordinate des lokalen Minimums 26. Der in Figur 3 gezeigte Verlauf der Garraumtemperatur *T_{G}* ist dabei idealisiert dargestellt. Dort bleibt außer Betracht, dass sich die Garraumtemperatur *T_{G}* sprunghaft ändert, wenn ein Anwender die Garraumtür 14 öffnet, um den Garraum 12 mit Gargut zu beschicken.

Alternativ kann auch die Ableitung des Verlaufs der Garraumtemperatur *T_{G},* also der Differentialquotient (numerisch der Differenzenquotient) *dT_{G}*/*dt* (Δ*T_{G}*/Δ*t*) ermittelt und ausgewertet werden, insbesondere in einem Bereich, der zeitlich dem Durchschreiten des lokalen Minimums folgt. Je höher die Beschickungslast ist, desto steiler ist der Abfall der Garraumtemperatur *T_{G}* nach dem Beschicken und desto flacher ist der Anstieg der Garraumtemperatur *T_{G}* nach Durchschreiten des lokalen Minimums 26.

Gemäß einer weiteren Variante kann ein Anwender die Beschickungslast über die Eingabe- und Anzeigemittel 24 manuell einstellen.

Die Beschickungslast kann in Schritt S1 auch klassifiziert werden, beispielsweise in die Kategorien gering, mittel und groß. Die Klassifizierung kann anhand der maximalen Beschickungsmenge, gemessen in Gastronomie-Behältern (GN-Behälter), erfolgen. Beispielsweise ist die Klassifizierung wie folgt: eine Beladung mit weniger als einem Viertel der maximal möglichen GN-Behälter entspricht einer kleinen Beschickungslast, eine Beladung zwischen einem Viertel und der Hälfte der maximal möglichen GN-Behälter entspricht einer mittleren Beschickungslast und eine Beladung mit mehr als der Hälfte der maximal möglichen GN-Behälter entspricht einer großen Beschickungslast.

Zum Dampfgaren des Garguts wird mittels der Dampferzeugungseinrichtung 21 Dampf erzeugt und, falls der Dampf außerhalb des Garraums 12 erzeugt wird, in den Garraum 12 eingebracht. Der Schritt S1 des Ermittelns der Beschickungslast kann zeitlich vor oder während des Einbringens des Dampfes in den Garraum erfolgen. Vorzugsweise wird zu diesem Zeitpunkt mittels der Luftumwälzungsvorrichtung 22 kein Luftvolumenstrom in den Garraum 12 erzeugt.

Ein mittels der Luftumwälzungsvorrichtung 22 erzeugter Luftvolumenstrom wird basierend auf der ermittelten Last geregelt (Schritt S2). Bei dem Luftvolumenstrom handelt es sich um einen Strom in den Garraum 12, einen Strom aus dem Garraum 12 und/oder einen Strom im Garraum 12. Wird der Dampf außerhalb des Garraums 12 erzeugt, so wird der Luftvolumenstrom wenigstens während des Einbringens des Dampfes in den Garraum 12 geregelt.

Insbesondere wird der Luftvolumenstrom dadurch geregelt, dass die Drehzahl und/oder die Drehrichtung wenigstens eines Lüfterrads der Luftumwälzungsvorrichtung verändert wird.

Wurde in Schritt S1 eine geringe Beschickungslast ermittelt, so wird vorzugsweise ein Luftvolumenstrom von null eingestellt (Schritt S3).

Wurde in Schritt S1 eine mittlere oder eine hohe Beschickungslast ermittelt, so werden nun weitere Betriebsparameter des Gargeräts herangezogen, um den Luftvolumenstrom zu regeln (Schritt S4). Insbesondere werden in diesem Schritt die weiteren Betriebsparameter auch ermittelt.

Dabei kann vorgesehen sein, dass bereits eine gewisser, niedriger Luftvolumenstrom eingestellt wird, sobald erkannt wird, dass er sich um eine mittlere oder um eine große Beschickungslast handelt. Dies erfolgt also insbesondere bevor die weiteren Betriebsparameter herangezogen werden, um den Luftvolumenstrom genauer zu regeln.

Basierend auf den weiteren Betriebsparametern, insbesondere basierend auf wenigstens einem weiteren Betriebsparameter, wird der Luftvolumenstrom eingestellt. Bei den Betriebsparametern handelt es sich vorzugsweise um eine oder mehrere der folgenden Größen der Garraumatmosphäre: Temperatur, relative Luftfeuchtigkeit, absolute Luftfeuchtigkeit, auf das wenigstens eine Lüfterrad wirkender Widerstand und/oder Druck.

Der oder die Betriebsparameter werden bevorzugt in verschiedenen Bereichen des Gargeräts ermittelt und miteinander verglichen (Schritt S5), um die Drehzahl zu regeln.

Wird dabei ein großer Unterschied in den Betriebsparametern in den verschiedenen Bereichen ermittelt, so deutet dies auf eine Inhomogenität der Garraumatmosphäre hin. Weichen die Betriebsparameter um mehr als einen vordefinierten Wert voneinander ab und/oder gleichen sich nur langsam aneinander an, so wird der Luftvolumenstrom erhöht (Schritt S6).

Weichen die Betriebsparameter in den verschiedenen Bereichen hingegen um weniger als den vordefinierten Wert voneinander ab und/oder gleichen sich schnell genug aneinander an, so wird der aktuelle Luftvolumenstrom beibehalten (Schritt S7).

Es kann vorgesehen sein, dass der Luftvolumenstrom reduziert wird, wenn die Betriebsparameter in den verschiedenen Bereichen ähnliche Werte aufweisen und/oder sich sehr schnell aneinander angleichen.

Gemäß einer Variante handelt es sich bei den Betriebsparametern um eine Temperatur der Garraumatmosphäre in unterschiedlichen Bereichen des Garraums 12, insbesondere in Bodennähe und in Deckennähe. Insbesondere sind dafür Messeinrichtungen 28 im Gargerät 10 vorgesehen, die dazu eingerichtet sind, die Temperatur der Garraumatmosphäre in dem jeweiligen Bereich zu ermitteln. Die Temperatur in Bodennähe oder Deckennähe kann aber auch mittels eines Kerntemperaturfühlers ermittelt werden, sodass keine oder nur eine zusätzliche Messeinrichtung 28 notwendig ist.

Gemäß einer weiteren Variante wird die Temperatur der Garraumatmosphäre mit einer Temperatur eines Bereichs des Gargeräts 10 verglichen, der sich außerhalb des Garraums 12 befindet. Dabei handelt es sich zum Beispiel um einen Abluftkanal oder eine Kondensationskammer (dort ist meist ohnehin ein Temperaturfühler vorgesehen, sodass kein zusätzliches Messequipment notwendig ist).

Alternativ wird die Luftfeuchtigkeit der Garraumatmosphäre in unterschiedlichen Bereichen des Garraums 12 verglichen, insbesondere in Bodennähe und in Deckennähe. In dieser Variante können die Messeinrichtungen 28 dazu ausgebildet sein, die Luftfeuchtigkeit der Garraumatmosphäre in dem jeweiligen Bereich zu ermitteln.

Weist die Luftumwälzungsvorrichtung 22 mehrere Lüfterräder in verschiedenen Bereichen des Gargeräts 10 auf, so kann auch folgende Variante durchgeführt werden: Die Lüfterräder werden alle kurz angefahren, insbesondere mit gleicher Drehzahl, und die auf die einzelnen Lüfterräder wirkenden, von der Garraumatmosphäre verursachten Widerstände werden ermittelt und verglichen. Dies geschieht beispielsweise anhand einer Strom- und/oder Leistungsaufnahme der einzelnen Lüfterräder.

Durch die Pfeile in Figur 2, die von den Schritten S6 und S7 zurück zu Schritt S4 führen, ist angedeutet, dass die Schritte des Ermittelns und Vergleichens der Betriebsparameter in gewissen zeitlichen Abständen wiederholt erfolgen können, insbesondere kontinuierlich.

## Patentansprüche

1. Verfahren zum Betreiben eines Gargeräts (10), das eine Dampferzeugungseinrichtung (21), eine Heizeinrichtung (20) sowie eine Luftumwälzungsvorrichtung (22) aufweist, mit den folgenden Schritten:
- Ermitteln einer Beschickungslast in einem Garraum (12);
- Erzeugen von Dampf mittels der Dampferzeugungseinrichtung (21); und
- Regeln eines mittels der Luftumwälzungsvorrichtung (22) erzeugten Luftvolumenstroms basierend auf der ermittelten Beschickungslast;
wobei die Drehzahl und/oder die Drehrichtung wenigstens eines Lüfterrads der Luftumwälzungsvorrichtung (22) verändert wird, um den Luftvolumenstrom zu regeln, und wobei die Schritte des Verfahrens vom Gargerät (10) durchgeführt werden,
**dadurch gekennzeichnet, dass** die Beschickungslast in die Kategorien gering, mittel und groß klassifiziert wird, wobei eine Beladung mit weniger als einem Viertel der maximal möglichen Gastronomie-Behälter einer kleinen Beschickungslast entspricht, wobei eine Beladung zwischen einem Viertel und der Hälfte der maximal möglichen Gastronomie-Behälter einer mittleren Beschickungslast entspricht, wobei eine Beladung mit mehr als der Hälfte der maximal möglichen Gastronomie-Behälter einer großen Beschickungslast entspricht,
wobei der Luftvolumenstrom auf null geregelt wird, wenn eine geringe Beschickungslast ermittelt wird,
wobei zumindest dann, wenn eine mittlere oder eine große Beschickungslast ermittelt wurde, weitere Betriebsparameter des Gargeräts (10) herangezogen werden, um den Luftvolumenstrom zu regeln, wobei Betriebsparameter in verschiedenen Bereichen des Gargeräts (10) miteinander verglichen werden, um den Luftvolumenstrom zu regeln, und wobei der Luftvolumenstrom schrittweise erhöht wird, wenn die Betriebsparameter in den verschiedenen Bereichen des Gargeräts (10) um mehr als einen vordefinierten Wert voneinander abweichen.

2. Verfahren nach Anspruch 1, **dadurch gekennzeichnet, dass** die Beschickungslast aus einem Verlauf der Garraumtemperatur (*T_{G}*) ermittelt wird.

3. Verfahren nach einem der vorhergehenden Ansprüche, **dadurch gekennzeichnet, dass** Temperaturen in verschiedenen Bereichen des Gargeräts (10) miteinander verglichen werden.

4. Verfahren nach einem der vorhergehenden Ansprüche, **dadurch gekennzeichnet, dass** an verschiedenen Lüfterrädern der Luftumwälzungsvorrichtung (22) wirkende Widerstände miteinander verglichen werden.

5. Verfahren nach einem der vorhergehenden Ansprüche, **dadurch gekennzeichnet, dass** eine Luftfeuchtigkeit der Garraumatmosphäre in verschiedenen Bereichen des Gargeräts (10) miteinander verglichen wird.

6. Gargerät (10) mit einer Dampferzeugungseinrichtung (21), einer Heizeinrichtung (20) sowie einer Luftumwälzungsvorrichtung (22), **dadurch gekennzeichnet, dass** das Gargerät (10) dazu eingerichtet ist, ein Verfahren nach einem der vorhergehenden Ansprüche durchzuführen.

## Claims

1. A method of operating a cooking appliance (10) which includes a steam generating device (21), a heater (20), and an air circulation device (22), comprising the following steps:
- determining a charge load in a cooking chamber (12);
- generating steam by means of the steam generating device (21); and
- controlling an air volume flow generated by means of the air circulation device (22) based on the charge load determined;
wherein the speed and/or the direction of rotation of at least one fan wheel of the air circulation device (22) is varied in order to adjust the air volume flow, and wherein the steps of the method are carried out by the cooking appliance (10),
**characterized in that** the charge load is classified into the categories of low, medium, and high, wherein a loading of less than a quarter of the maximum possible catering containers corresponds to a low charge load, wherein a loading of between a quarter and half of the maximum possible catering containers corresponds to a medium charge load, wherein a loading of more than half of the maximum possible catering containers corresponds to a high charge load,
wherein the air volume flow is adjusted to zero when a low charge load is determined,
wherein at least when a medium or a high charge load has been determined, further operating parameters of the cooking appliance (10) are made use of to adjust the air volume flow, wherein operating parameters in different areas of the cooking appliance (10) are compared with each other to adjust the air volume flow, and wherein the air volume flow is increased step by step if the operating parameters in the different areas of the cooking appliance (10) differ from each other by more than a predefined value.

2. The method according to claim 1, **characterized in that** the charge load is determined from a profile of the cooking chamber temperature (*T_{G}*)*.*

3. The method according to either of the preceding claims, **characterized in that** temperatures in different areas of the cooking appliance (10) are compared with each other.

4. The method according to any of the preceding claims, **characterized in that** resistances acting at different fan wheels of the air circulation device (22) are compared with each other.

5. The method according to any of the preceding claims, **characterized in that** air moistures of the cooking chamber atmosphere in different areas of the cooking appliance (10) are compared with each other.

6. A cooking appliance (10) comprising a steam generating device (21), a heater (20), and an air circulation device (22), **characterized in that** the cooking appliance (10) is configured to carry out a method according to any of the preceding claims.

## Revendications

1. Procédé de mise en œuvre d'un appareil de cuisson (10) qui comprend un moyen de production de vapeur (21), un moyeu de chauffage (20) et un dispositif de circulation d'air (22), comprenant les étapes suivantes :
- la détermination d'une charge d'amenée dans un espace de cuisson (12) ;
- la production de vapeur en utilisant le moyen de production de vapeur (21) ; et
- le réglage d'un flux volumique d'air produit au moyen du dispositif de circulation d'air (22) sur la base de la charge d'amenée déterminée ;
la vitesse de rotation et/ou le sens de rotation d'au moins une roue de ventilateur du dispositif de circulation d'air (22) étant modifié(e)s afin de régler le flux volumique d'air, et les étapes du procédé étant exécutées par l'appareil de cuisson (10),
**caractérisé en ce que** la charge d'amenée est classée dans les catégories faible, moyenne et grande, un chargement inférieur à un quart des récipients de gastronomie au maximum possibles correspondant à une faible charge d'amenée, un chargement compris entre un quart et la moitié des récipients de gastronomie au maximum possibles correspondant à une charge d'amenée moyenne, un chargement supérieur à la moitié des récipients de gastronomie au maximum possibles correspondant à une grande charge d'amenée,
le flux volumique d'air étant réglé à zéro lorsqu'une faible charge d'amenée est détectée,
d'autres paramètres de fonctionnement de l'appareil de cuisson (10) étant utilisés au moins lorsqu'une charge d'amenée moyenne ou grande a été détectée pour régler le flux volumique d'air, des paramètres de fonctionnement dans différentes zones de l'appareil de cuisson (10) étant comparés les uns avec les autres pour régler le flux volumique d'air, et le flux volumique d'air étant augmenté progressivement lorsque les paramètres de fonctionnement dans les différentes zones de l'appareil de cuisson (10) diffèrent les uns des autres de plus d'une valeur prédéfinie.

2. Procédé selon la revendication 1, **caractérisé en ce que** la charge d'amenée est détectée à partir d'une courbe de la température d'espace de cuisson (*T_{G}*)*.*

3. Procédé selon l'une des revendications précédentes, **caractérisé en ce que** les températures dans différentes zones de l'appareil de cuisson (10) sont comparées les unes avec les autres.

4. Procédé selon l'une des revendications précédentes, **caractérisé en ce que** des résistances agissant au niveau de différentes roues de ventilateur du dispositif de circulation d'air (22) sont comparées les unes avec les autres.

5. Procédé selon l'une des revendications précédentes, **caractérisé en ce que** des humidités d'air de l'atmosphère de l'espace de cuisson dans différentes zones de l'appareil de cuisson (10) sont comparées les unes avec les autres.

6. Appareil de cuisson (10) comprenant un moyen de production de vapeur (21), un moyen de chauffage (20) et un dispositif de circulation d'air (22), **caractérisé en ce que** l'appareil de cuisson (10) est réalisé de manière à exécuter un procédé selon l'une des revendications précédentes.
